# EUROPEAN PATENT APPLICATION

(11) **EP 1 898 642 A1**
(43) Date of publication of application: **12.03.2008**
(21) Application number: 06714125.9
(22) Date of filing: 20.02.2006
(51) Int. Cl.: H04N 5/93

(54) **REPRODUCING APPARATUS**

(30) Priority: 29.06.2005 JP 2005189088
(71) Applicant: D&M Holdings, Inc., Kanagawa 210-8569 (JP)
(72) Inventor: MATSUMOTO, Yoshiaki c/o D & M Holdings Inc., Kawasaki-shi, Kanagawa 2108569 (JP)
(74) Representative: Hackney, Nigel John
(86) International application number: PCT/JP2006/302985
(87) International publication number: WO 2007/000836

(57) **Abstract**

Provided is a reproducing apparatus for correctly reproducing analog video signals on a display apparatus. The reproducing apparatus includes a reproducing part (5) for reproducing digital audio signals and digital video signals synchronized with the digital audio signals from a recording medium; an audio signal storing part (8); a video signal storing part (11); an interface part (9) for transmitting the digital audio signals to an external apparatus and receiving a rate control command for controlling a transmission rate thereof; a first oscillating part (14) for generating a clock for controlling the transmission rate of the digital audio signals; a DAC (13) for converting the digital video signals from the video signal storing part (11) into analog video signals; a video signal output part (17) for converting the analog video signals from the DAC (13), into analog video signals including color signals generated through orthogonal modulation and outputting the analog video signal including color signals to the display apparatus; and a second oscillating part (15) for generating a fixed clock to keep a constant output rate of outputting the analog video signals including color signals.

## Description

### TECHNICAL FIELD

The present invention relates to technology for synchronously reproducing digital audio signals and digital video signals recorded in a recording medium.

### BACKGROUND ART

Conventionally, there has been a reproducing apparatus such as a digital versatile disc (DVD) player provided with a digital interface compliant with the Institute of Electrical and Electronic Engineers (IEEE)-1394 standard (hereinafter, referred to as IEEE 1394 interface) (see, for example, Japanese Patent Application-Laid-open No. Hei 11-339386).

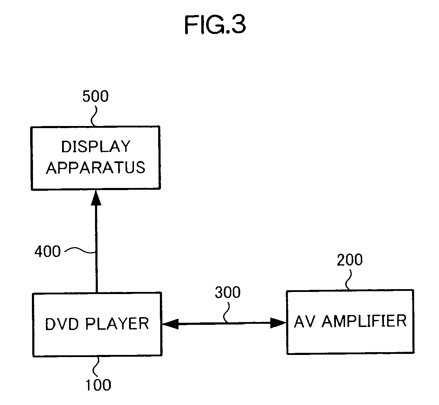

With reference to Fig. 3, a description is given of an example in which a conventional DVD player is connected to other apparatuses through the IEEE 1394 interface. A DVD player 100 and an audio visual (AV) amplifier 200 are connected to each other through an IEEE 1394 serial bus 300, whereby digital audio signals recorded in a DVD are transmitted to the AV amplifier. Also, video signals synchronized with multi-channel audio signals recorded in the DVD are output from the DVD player 100 to a display apparatus (such as Television) 500 which is connected to the DVD player 100 through a video cord 400.

Many of the DVD players, each provided with the IEEE 1394 interface, transmit digital audio signals which are converted into a format of audio and music data transmission protocol (A&M protocol) specified in the IEEE-1394 standard. The A&M protocol is for transmitting digital audio signals and auxiliary data thereof, but does not support transmission of video signals.

In this example, the apparatuses connected to one another through the conventional IEEE 1394 interface are each provided with a clock source which generates an operation clock independently of the other clock sources. Accordingly, as shown in Fig. 3, even when the DVD player 100 and the AV amplifier 200 are connected to each other through the IEEE 1394 serial bus, the clock sources of the DVD player 100 and the AV amplifier 200 generally generate clocks having frequencies that are different from each other. For this reason, the DVD player 100 and the AV amplifier 200 perform signal processing at different times, which leads to jitter being generated when the DVD player 100 transmits digital audio signals to the AV amplifier 200.

To reduce the jitter in the audio signals, the above-mentioned A&M protocol has a transmission rate control standard (for example, AV/C Command Set for Rate Control of Isochronous Data Flow 1.0) available thereto. This standard will be described with reference to Fig. 3 as an example. According to an asynchronous protocol of the above-mentioned standard, the AV amplifier 200 outputs a rate control command based on a frequency of a clock generated by the clock source incorporated therein, to the DVD player 100. Based on the rate control command received from the AV amplifier 200, the DVD player 100 changes a frequency of a clock generated by the clock source incorporated therein so as to adjust the frequency to the frequency of the clock of the clock source provided to the AV amplifier 200, to thereby control the transmission rate of transmitting digital audio signals to the AV amplifier 200. In this manner, it is possible to reduce jitter to be generated in a transmission path between the DVD player 100 and the AV amplifier 200.

Further, it is also possible to suppress generation of the jitter by adjusting a frequency of an operation clock of a digital analog converter provided to the AV amplifier 200 to the frequency of the clock of the clock source provided to the DVD player 100.

However, as shown in Fig. 3, in a case where the reproducing apparatus such as a DVD player transmits video signals to the display apparatus which is different from an apparatus such as an AV amplifier to which audio signals are transmitted, there may arise a problem depending on an output mode of the video signals to the display apparatus. Specifically, in a case of transmitting, from the reproducing apparatus to the display apparatus, analog video signals including color signals (for example, analog composite signals or analog S-Video signals) which have been orthogonally modulated, the above-mentioned method for preventing jitter may produce an unfavorable effect on the transmission signals.

Specifically, when the rate control command is received from the output destination of the audio signals, the reproducing apparatus changes the clock frequency based on the rate control command thus received.

In general, the reproducing apparatus such as a DVD player operates based on a clock divided from a clock generated by the same clock source. Accordingly, in the case where the rate control command is received from an apparatus which is a transmission destination of the audio signals, an output rate of the video signals is also changed, as well as the transmission rate of the audio signals.

It should be noted that the analog composite signals or the analog S-video signals have color-difference signals multiplexed, as phase modulation signals with respect to a color subcarrier wave, with luminance signals. The display apparatus generates a demodulation carrier which is synchronized with the frequency and the phase of the color subcarrier wave of the analog video signals thus input, and compares the color subcarrier wave of the input analog video signals with the phase of the generated demodulation carrier, to thereby demodulate the color difference signals.

When the clock is changed, with the result that the output rate of inputting the analog video signals is changed, it may lead to a case where the color difference signals are not correctly demodulated in the display apparatus. This results in a fear that a color image displayed on a screen of the display apparatus will have color drift occurring therein, or the color image will be displayed as a monochrome image. It is an object of the present invention to solve the above-mentioned problems inherent in the prior art.

### DISCLOSURE OF THE INVENTION

According to an aspect of the present invention, there is provided a reproducing apparatus, including: a reproducing part for reproducing digital audio signals and a digital video signal synchronized with the digital audio signals, those are recorded in a recording medium; an audio signal storing part for storing the digital audio signals reproduced by the reproducing part and reading out the digital audio signals; a video signal storing part for storing the digital video signals reproduced by the reproducing part and reading out the digital video signals; an interface part for transmitting the digital audio signals reproduced by the reproducing part to an external apparatus and receiving a rate control command for controlling a transmission rate of transmitting the digital audio signals; a first oscillating part for generating a clock for controlling the transmission rate of transmitting the digital audio signals from the interface part, the transmission rate being changed according to the rate control command received by the interface part; a converting part for converting the digital video signals read out from the video signal storing part into analog video signals; a video signal output part for converting the analog video signals from the converting part into analog video signals including color signals generated through orthogonal modulation and outputting the analog video signals including color signals to a display apparatus; and a second oscillating part for generating a fixed clock to keep a constant output rate of outputting the analog video signals from the video signal output part. The reproducing apparatus structured as described above is capable of correctly reproducing, to the display apparatus, the analog video signals including color signals generated through orthogonal modulation by controlling the output rate of the analog digital signals to keep the output rate constant, even when the transmission rate of the digital audio signals is changed.

Further, in the reproducing apparatus, the video signal output part converts the analog video signals from the converting part into analog composite signals or analog S-Video signals and outputs the analog composite signals or the analog S-Video signals to the display apparatus. This is because the reproducing apparatus is capable of keeping a constant transmission rate of transmitting the analog video signals to the display apparatus, and therefore the analog composite signals or the analog S-Video signals, which are the analog video signals including the color signals which have been orthogonally modulated, can be correctly demodulated in the display apparatus.

Still further, in the reproducing apparatus, the reproducing part reproduces digital video signals based on the clock generated by the first oscillating part; and the video signal storing part reads out the digital video signals stored therein, based on the clock generated by the second oscillating part. With this structure, a reading rate of reading out the digital video signals from the video signal storing part is kept constant, and the analog video signals transmitted from the reproducing apparatus including the color signals which have been orthogonally modulated, can be correctly demodulated.

Yet further, the reproducing apparatus further includes an interpolation processing part for monitoring an amount of digital video signals stored in the video signal storing part and performing an interpolation process of the digital video signals stored in the digital video signal storing part, depending on the amount. With this structure, even when a difference is generated between a writing rate of writing the video signals into the video signal storing part and a reading rate of reading out the video signals from the video signal storing part due to two clocks independently generated, it is possible to prevent overflow or underflow from occurring in the video signal storing part.

### BRIEF DESCRIPTION OF THE DRAWINGS

[Fig. 1] A block diagram of a reproducing apparatus according to an exemplary embodiment of the present invention.
[Figs. 2A and 2B] Explanatory diagrams for illustrating an interpolation process according to the exemplary embodiment.
[Fig. 3] A diagram showing an example of connection between a DVD player, an AV amplifier, and a display apparatus.
[Fig. 4] A block diagram of a reproducing apparatus according to another exemplary embodiment of the present invention.

### BEST MODE FOR CARRYING OUT THE INVENTION

Hereinbelow, a reproducing apparatus according to an exemplary embodiment of the present invention is described with reference to the drawings. As shown in Fig. 3, the reproducing apparatus according to this exemplary embodiment transmits audio signals to an AV amplifier through an IEEE 1394 interface and also transmits analog video signals to a display apparatus such as TV through a video cable. Note that the exemplary embodiments described below are merely examples, and the present invention is not limited thereto.

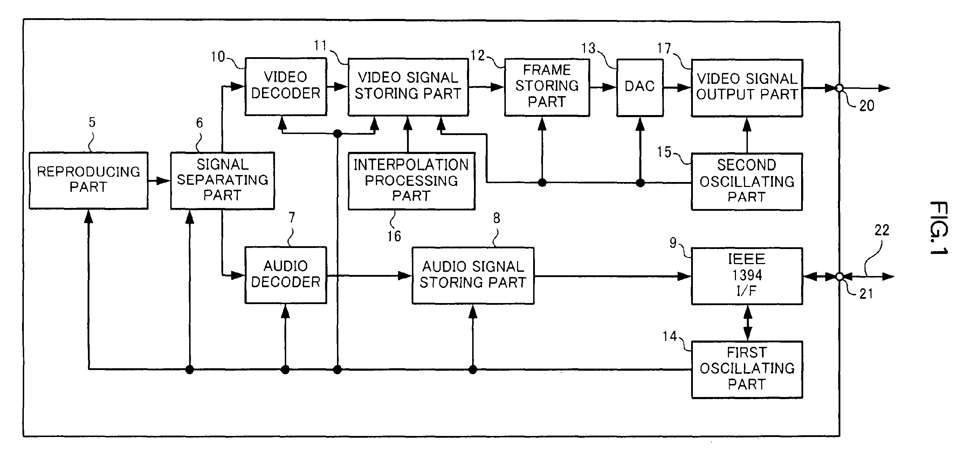

Fig. 1 is a block diagram of the reproducing apparatus according to this exemplary embodiment. The reproducing apparatus shown in Fig 1 includes a reproducing part 5, a signal separating part 6, an audio decoder 7, an audio signal storing part 8, an IEEE 1394 interface (I/F: Interface) 9, a video decoder 10, a video signal storing part 11, a frame storing part 12, a digital to analog converter (DAC) 13, a video signal output part 17, a first oscillating part 14, second oscillating part 15, and an interpolation processing part 16.

The reproducing part 5 reproduces compressed digital audio signals and digital video signals synchronized therewith from a recording medium. In this case, the digital video signals are component signals. The recording medium may include an optical disk including a Video-compact disc (CD), a digital versatile disc (DVD), a blu-ray disc, or a high-definition DVD (HD-DVD), or may include an HD (Hard Disk). The reproducing part 5 is formed of a disc drive including an optical pick up when reproducing signals from an optical disk, or formed of a hard disk drive (HDD) when reproducing signals from an HD.

The signal separating part 6 separates the signals reproduced by the reproducing part 5 into digital audio signals and digital video signals.

The audio decoder 7 stores the digital audio signals input from the signal separating part 6 in a read buffer (not shown), and decodes the digital audio signals stored in the read buffer. When the signals read out from the recording medium are uncompressed signals modulated through, for example, Linear PCM (Pulse Code Modulation), the audio decoder 7 merely corrects the format thereof and outputs the signals.

The audio signal storing part 8 stores the digital audio signals decoded by the audio decoder 7. The audio signals stored in the audio signal storing part 8 are sequentially read out in the order in which the audio signals have been stored.

The IEEE 1394 interface 9 is a digital interface compliant with the IEEE-1394 standard, and converts the digital audio signals input from the audio signal storing part 8 into a format of A&M protocol. The IEEE 1394 interface 9 is connected to an IEEE 1394 serial bus 22 through an IEEE 1394 connecting terminal 21. One end of the IEEE 1394 serial bus 22 is connected to an AV amplifier or the like, and the digital audio signals which have been converted into the format of A&M protocol are transmitted to the AV amplifier or the like.

To the contrary, the IEEE 1394 interface 9 receives a control command from the AV amplifier or the like. The IEEE 1394 receives a rate control command based on an asynchronous protocol (AV/C Digital Interface Command Set General Specification) from a transmission destination of the audio signals.

The video decoder 10 stores the digital video signals input from the signal separating part 6 in a read buffer (not shown) and decodes the digital video signals stored in the read buffer, according to a decompression protocol such as the moving picture experts group (MPEG) system.

The video signal storing part 11 stores the digital video signals decoded by the video decoder 10. The digital video signals stored in the video signal storing part 11 are sequentially read out in units of one frame.

The frame storing part 12 stores the digital video signals output from the video signal storing part 11 in units of one frame.

The DAC 13 converts the digital video signals from the frame storing part 12 into analog video signals. The video signals output from the DAC 13 are analog component signals.

The video signal output part 17 converts the analog video signals from DAC 13 into analog video signals including color signals which have been orthogonally modulated, and outputs the analog video signals. For example, the video signal output part 17 is formed by including a national television standards committee (NTSC)/phase alternation by line (PAL) encoder, and converts the analog component signals into, for example, analog composite signals or analog S-Video signals.

The analog video signals from the video signal output part 17 are transmitted to a display apparatus through a video output terminal 20. The display apparatus may take any form such as TV or a projector, as long as it is capable of displaying an image based on the analog video signals.

The first oscillating part 14 is formed by including, for example, a crystal oscillator, and generates a clock for controlling an operation of outputting (transmitting) digital video signals from the reproducing apparatus. The operation of outputting (transmitting) digital video signals is performed by the reproducing part 5, the signal separating part 6, the audio decoder 7, the audio signal storing part 8, the IEEE 1394 interface 9, the video decoder 10, and the video signal storing part 11. A transmission rate of transmitting the digital video signals from the reproducing apparatus is basically determined by the reading rate in the reproducing part 5.

When the rate control command based on an asynchronous protocol (AV/C Digital Interface Command Set General Specification) is received from a transmission destination of the digital audio signals, through the IEEE 1394 interface 9, the first oscillating part 14 changes a frequency of a clock to be generated, according to the rate control command thus received. When the frequency of the clock to be input from the first oscillating part 14 to the audio signal storing part 8 is changed, the reading rate of reading the digital audio signals from the audio signal storing part 8 is controlled according to the change. In this manner, the transmission rate of transmitting the digital audio signals from the reproducing apparatus is controlled based on the rate control command from a transmission destination such as an AV amplifier.

The second oscillating part 15 is formed by including, for example, a crystal oscillator, and generates a clock of fixed frequency for controlling an operation of reading digital video signals. The operation of reading digital video signals is performed by the frame storing part 12, the DAC 13, the video signal output part 17, and the video signal storing part 11. The second oscillating part 15 controls an operation of outputting (transmitting) video signals from the reproducing apparatus. An output rate of outputting the digital video signals from the reproducing apparatus is basically determined by the reading rate of reading out the video signals from the video signal storing part 11.

The second oscillating part 15 generates a clock of fixed frequency, and therefore the reading rate of reading out the digital video signals stored in the video signal storing part 11 is kept constant. Accordingly, it is possible to transmit the analog video signals from the reproducing apparatus to the display apparatus at a constant transmission rate.

The interpolation processing part 16 monitors an amount of the digital video signals stored in the video signal storing part 11, and performs an interpolation process according to the status thereof. Specifically, the interpolation processing part 16 deletes the video signals stored in the video signal storing part 11 when the storage amount of the digital video signals stored in the video signal storing part 11 exceeds a predetermined upper limit threshold value. Also, the interpolation processing part 16 adds the digital video signals to be read out from the video signal storing part 11, when the storage amount of the digital video signals stored in the video signal storing part 11 is reduced to be lower than a predetermined lower limit threshold value.

Next, a description is given of a reproducing operation of the reproducing apparatus according to this exemplary embodiment when the rate control command is received from a transmission destination of the digital audio signals through the IEEE 1394 serial bus.

When the rate control command is received from the AV amplifier connected through the IEEE 1394 interface 9, the first oscillating part 14 changes a frequency of a clock to be generated according to the rate control command thus received. The audio signal storing part 8 changes the reading rate of reading out the digital audio signals, according to the changed clock. In this manner, the transmission rate of transmitting digital audio signals from the reproducing apparatus is controlled based on the rate control command from the transmission destination. Accordingly, the processing timings of their audio signals in the reproducing apparatus and the AV amplifier or the like are accorded, which prevents jitter from being generated.

On the other hand, the second oscillating part 15 keeps generating a clock of constant frequency. Accordingly, in this exemplary embodiment, the digital video signals are read out from the video signal storing part 11 at a constant reading rate, and the transmission rate of transmitting the analog video signals from the reproducing apparatus to the display apparatus is also kept constant. Therefore, the transmission rate of transmitting the analog video signals from the reproducing apparatus, the analog video signals including the color signals orthogonally modulated, is not changed, and the color difference signals are correctly demodulated. As a result, a situation where a color image displayed on the display apparatus has color drift occurring therein, or the color image is reproduced as a monochrome image, is reliably prevented.

At this time, when the first oscillating part 14 keeps generating a clock of frequency different from the frequency of the clock generated by the second oscillating part 15, the difference between the frequencies may lead to overflow or underflow which occurs in the video signal storing part 11. When overflow or underflow occurs in the video signal storing part 11, the video signals cannot be read out from the video signal storing part 11, and the output of the video signals to the display apparatus is discontinued. In this case, the output of the video signals lags behind the output of the audio signals.

The overflow occurs in the video signal storing part 11 in a case where the frequency of the clock to be input to the video signal storing part 11 from the first oscillating part 14 is higher than the frequency of the clock to be input to the video signal storing part 11 from the second oscillating part 15, that is, a case where the writing rate of writing the digital video signals in the video signal storing part 11 is higher than the reading rate thereof. The underflow occurs in the video signal storing part 11 in a case where the frequency of the clock to be input to the video signal storing part 11 from the first oscillating part 14 is lower than the frequency of the clock to be input to the video signal storing part 11 from the second oscillating part 15, that is, a case where the writing rate of writing the digital video signals in the video signal storing part 11 is lower than the reading rate thereof.

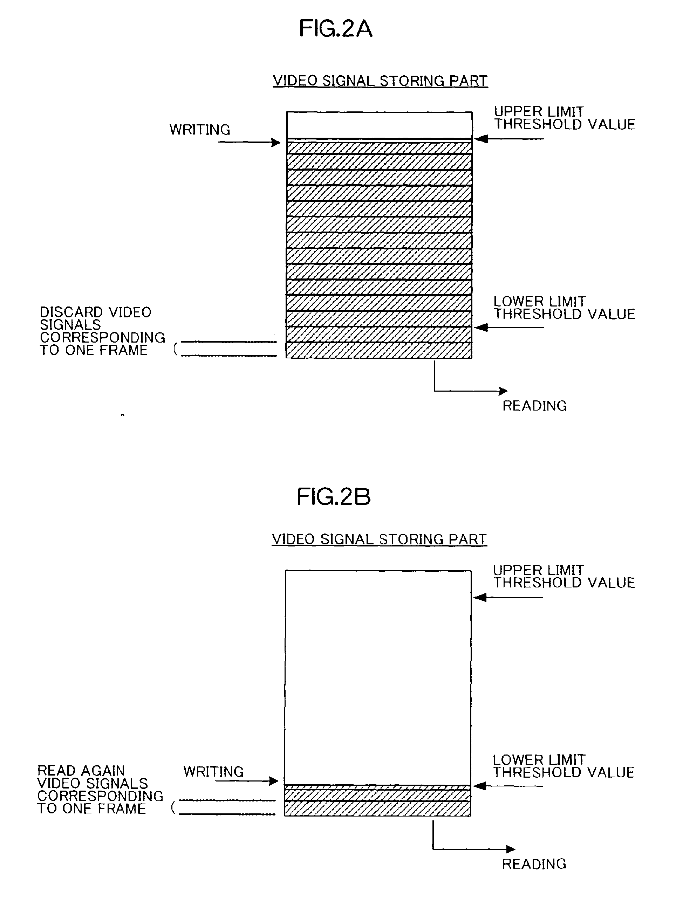

To prevent the overflow or the underflow from occurring in the video signal storing part 11 due to the difference between the two clock frequencies, the interpolation processing part 16 monitors the amount of the digital video signals stored in the video signal storing part 11 and performs an interpolation process depending on the amount. The interpolation processing part 16 sets a upper limit threshold value and a lower limit threshold value in the storage capacity of the video signal storing part 11, and monitors the storage amount of the digital video signals. Default values may be set for the threshold values. Figs. 2A and 2A show diagrams for describing an operation of the interpolation processing part 16 which monitors the storage amount in the video signal storing part 11 and performs the interpolation process.

Fig. 2A shows a situation where the storage amount of the digital video signals stored in the video signal storing part 11 almost exceeds the upper limit threshold value. When the storage amount of the digital video signals stored in the video signal storing part 11 exceeds the upper limit threshold value, the interpolation processing part 16 deletes digital video signals corresponding to the oldest one of the frames stored in the video signal storing part 11.

Fig. 2B shows a situation where the storage amount of the digital video signals stored in the video signal storing part 11 almost falls below the lower limit threshold value. When the storage amount of the digital video signals stored in the video signal storing part 11 falls below the lower limit threshold value, the interpolation processing part 16 controls to read out again digital video signals corresponding to one frame which has been read out immediately before the storage amount of the digital video signals falls below the lower limit threshold value, from the video signal storing part 11. It is also possible, of course, to create a new frame from the subsequent frame and the preceding frame and adds the new frame to the video signal storing part 11.

As described above, the interpolation processing part 16 monitors the storage amount of the digital signals in the video signal storing part 11 and performs an interpolation process of interpolating digital video signals in the video signal processing part 11, which makes it possible to prevent overflow or underflow from occurring in the video signal storing part 11 due to the difference between two clock frequencies. Accordingly, when the audio signals recorded in an optical disk and the video signals synchronized with the audio signals are reproduced from a speaker and the display apparatus, it is possible to prevent a situation where the reproduction of the video signals to be reproduced is discontinued and the reproduction of the video signals synchronized with the audio signals lags behind the reproduction of the audio signals.

As described above, the reproducing apparatus according to this exemplary embodiment includes the second oscillating part 15 for generating a clock of constant frequency which determines a transmission rate of video signals, apart from the first oscillating part 14 for generating a clock for determining a transmission rate of the audio signals which is changed in accordance with the rate control command. With this structure, even when the rate control command is received, the analog video signals are transmitted to the display apparatus at a constant transmission rate, and the analog video signals including the color signals orthogonally modulated (such as analog composite signals or analog S-Video signals) can be correctly demodulated in the display apparatus. As a result, it is possible to prevent a situation where a color image displayed on the display apparatus has color drift occurring therein or the color image is reproduced as a monochrome image.

Also, the reproducing apparatus of this exemplary embodiment includes the interpolation processing part 16 for monitoring the storage amount in the video signal storing part 11 and performing interpolation depending on the monitoring status. With this structure, even when a difference is generated between a writing rate of writing the video signals into the video signal storing part 11 and a reading rate of reading out the video signals from the video signal storing part 11 due to two clocks generated independently, it is possible to prevent overflow or underflow from occurring in the video signal storing part 11.

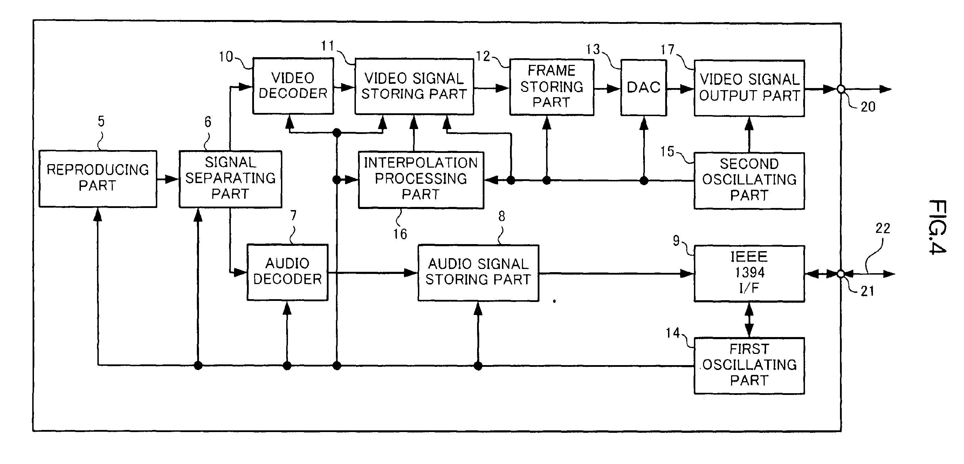

In the above-mentioned exemplary embodiment, the interpolation processing part 16 performs an interpolation process based on the storage amount in the video signal storing part 11. However, the present invention is not limited thereto. As shown in Fig. 4, the interpolation process may be performed based on the clocks generated by the first oscillating part 14 and the second oscillating part 15. An exemplary embodiment shown in Fig. 4 is different from the exemplary embodiment of Fig. 1 only in terms of the interpolation process performed by the interpolation processing part 16, and therefore other blocks denoted by reference numerals similar to those in Fig. 1 function similarly to the blocks in the exemplary embodiment of Fig. 1.

Also, the above-mentioned exemplary embodiments have each been described as an exemplary case where the present invention is applied to the reproducing apparatus provided with the IEEE 1394 interface. However, the present invention is not limited thereto, and any interface may be used as long as the interface is capable of controlling a transmission rate of transmitting the audio signals from the transmission destination to the transmission source.

Those exemplary embodiments described above in detail are merely examples of the present invention, and it is easily appreciated by those skilled in the art that various modifications can be made to the exemplary embodiments without greatly departing from the novel disclosure and advantages of the present invention. Accordingly, it is construed that those modifications are all included in the scope of the present invention.

Japanese Patent Application No. 2005-189088 (applied on 29 June, 2005) is referred to in its entirety, including the description, the scope of claims, the drawings, and the abstract thereof.

### INDUSTRIAL APPLICABILITY

The present invention is highly effective when applied to technology for synchronously reproducing digital audio signals and digital video signals recorded in a recording medium.

## Claims

1. A reproducing apparatus, comprising:
a reproducing part (5) for reproducing digital audio signals and digital video signals synchronized with the digital audio signals, those are recorded in a recording medium;
an audio signal storing part (8) for storing the digital audio signals reproduced by the reproducing part (5) and reading out the digital audio signals;
a video signal storing part (11) for storing the digital video signals reproduced by the reproducing part and reading out the digital video signals;
an interface part (9) for transmitting the digital audio signals reproduced by the reproducing part (5) to an external apparatus and receiving a rate control command for controlling a transmission rate of transmitting the digital audio signals;
a first oscillating part (14) for generating a clock for controlling the transmission rate of transmitting the digital audio signals from the interface part, the transmission rate being changed according to the rate control command received by the interface part (9);
a converting part (13) for converting the digital video signals read out from the video signal storing part (11) into analog video signals;
a video signal output part (17) for converting the analog video signals from the converting part (13) into analog video signals including color signals generated through orthogonal modulation, and outputting the analog video signals including color signals to a display apparatus; and
a second oscillating part (15) for generating a fixed clock to keep a constant output rate of outputting the analog video signals from the video signal output part (17).

2. A reproducing apparatus according to claim 1, wherein
the video signal output (17) part converts the analog video signals from the converting part (13) into analog composite signals or analog S-Video signals and outputs the analog composite signals or the analog S-Video signals to the display apparatus.

3. A reproducing apparatus according to claim 1 or 2, wherein:
the reproducing part (5) reproduces digital video signals based on the clock generated by the first oscillating part (14); and
the video signal storing part (11) reads out the digital video signals stored therein, based on the clock generated by the second oscillating part (15).

4. A reproducing apparatus according to any one of claims 1 to 3, further comprising an interpolation processing part (16) for monitoring an amount of digital video signals stored in the video signal storing part (11) and performing an interpolation process of the digital video signals stored in the digital video signal storing part (11), depending on the amount.
